# EUROPEAN PATENT SPECIFICATION

(11) **EP 3 460 602 B1**
(45) Date of publication and mention of the grant of the patent: **05.05.2021**
(21) Application number: 18156433.7
(22) Date of filing: 13.02.2018
(51) Int. Cl.: G05B 19/18, G05B 19/41

(54) **CONTROL APPARATUS AND CONTROL METHOD**
STEUERUNGSVORRICHTUNG UND STEUERUNGSVERFAHREN
APPAREIL DE COMMANDE ET PROCÉDÉ DE COMMANDE

(30) Priority: 22.09.2017 JP 2017182885
(43) Date of publication of application: 27.03.2019
(73) Proprietor: OMRON CORPORATION, Kyoto-shi, Kyoto 600-8530 (JP)
(72) Inventor: NAKANO, Masahiko, Kyoto-shi, Kyoto 600-8530 (JP); YAMAMOTO, Eiji, Kyoto-shi, Kyoto 600-8530 (JP); SHIMAMURA, Junji, Kyoto-shi, Kyoto 600-8530 (JP)
(74) Representative: Becker & Kurig Partnerschaft Patentanwälte PartmbB

(56) References cited:
- EP-A1- 2 629 163
- EP-A2- 0 917 033
- US-A- 5 955 856
- US-A1- 2016 288 256

## Description

### Technical Field

The disclosure relates to a control apparatus and a control method capable of controlling one or a plurality of motors

### Related Art

In various production fields, factory automation (FA) technologies using control apparatuses such as programmable controllers (PLC) are widely used. In accordance with the progress of information and communication technologies (ICTs) of recent years, the processing capability of control apparatuses has remarkably improved.

In addition, there is demand for integrating conventional control apparatuses realized by using a plurality of dedicated apparatuses into a small number of control apparatuses. For example, Japanese Laid-open No. 2012-194662 discloses a configuration in which a motion calculation program and a user program are executed in synchronization with each other in a CPU unit of a PLC. According to the configuration disclosed in Japanese Laid-open No. 2012-194662, a user program such as a sequence program and a motion calculation program can be executed such that they are synchronized and cooperated with each other. a user program such as a sequence program and a motion calculation program can be executed by cooperation with motivation. By employing such a PLC unit, a dedicated apparatus for realizing a motion calculation process becomes unnecessary.

EP 2 629 163 A1 discloses a control apparatus for controlling a device having a movable unit movable by a plurality of drive shafts. The control apparatus includes target trajectory generation means for generating a target trajectory for a movement section defined by a start point and an end point; remaining distance estimation means for estimating a remaining distance along the target trajectory from a current position to the end point; acceleration calculation means for calculating an acceleration involved in varying a current movement velocity of the movable unit to a target velocity corresponding to a movement velocity to be satisfied by the movable unit at the end point of the target trajectory; and movement velocity updating means for calculating a new target movement velocity value by correcting the current movement velocity with the acceleration calculated.

US 5 955 856 A discloses a numerical control apparatus and a numerical control method which permit high-accuracy and high-velocity travel at a joint between paths as well as simple and rapid calculations for this purpose.

### SUMMARY

In addition to the motion calculation as described above, for example, there is demand to realize control by following a target trajectory set in advance such as a machine tool or a robot using a single control apparatus.

In a case in which control by following a target trajectory is realized using a PLC, after modeling a defined target trajectory, it is necessary to calculate an instruction value for each control period. In such a process, when the accuracy of modeling is too high, the amount of calculation is high, and the calculation of an instruction value for each control period set in advance may not be realized. On the contrary, when the accuracy of modeling is too low, deviation from a required target trajectory may become greater. In this way, in control by following a target trajectory, it is difficult to achieve both of processing speed and control accuracy.

The present invention is provided by the appended claims. The following disclosure serves a better understanding of the invention. The disclosure provides a control apparatus and a control method capable of satisfying the demand for both of processing speed and control accuracy in a case in which control by following a target trajectory is executed by sequentially interpreting an application program.

According to one embodiment of the disclosure, a control apparatus for controlling one or a plurality of motors is provided. The control apparatus includes: an instruction value output unit configured to output an instruction value for the one or plurality of motors for each control period; and a command interpreting unit configured to sequentially interpret an application program including one or a plurality of commands defining a target trajectory and to generate an internal command that is necessary for outputting the instruction value for each control period that is executed by the instruction value output unit. The command interpreting unit is configured to calculate a passage point on the target trajectory for each period set in advance in accordance with a command included in the application program and to generate the internal command in accordance with calculated passage points and to change the period with which the passage points are calculated to a length designated by a special command defined in advance in a case in which a specific command (in the following also denoted as "special command") is executed in the sequential interpretation of the application program.

According to the disclosure, by adding a special command in association with a target command in accordance with the complexity of a target trajectory and the like, an execution form in which the control accuracy for a specific section is improved and the processing speed is prioritized for the other sections can be realized. Accordingly, the demand for both the processing speed and the control accuracy can be achieved.

In the disclosure described above, the command interpreting unit may interpret one or a plurality of commands used after a special command in the application program in accordance with designation using the special command when the special command is executed.

According to this disclosure, by only adding a special command before a command of which the designation is desired to be changed, a process according to the designation of the object can be realized, and the special command can be easily set.

In the disclosure described above, the special command may include a command used for returning the period with which the passage points are calculated to its original value.

According to this disclosure, in a case in which, after a specific setting is designated to a specific command, subsequent commands are desired to be processed using a normal setting, no input is necessary every time when the normal setting is executed, and the number of processes at the time of using the special command can be decreased.

In the disclosure described above, the command interpreting unit may generate an internal command corresponding to an interval between passage points adjacent to each other on the target trajectory based on information of a plurality of passage points subsequent to the passage points adjacent to each other on the target trajectory.

According to this disclosure, the accuracy of the generation of the internal command can be improved. In the disclosure described above, the special command may include a command designating the number of passage points required for generation of the internal command.

According to this disclosure, not only the period for calculating the passage points can be adjusted, but also the number of passage points used for the generating the internal command can be adjusted, and accordingly, the control accuracy can be adjusted more flexibly.

In the disclosure described above, the control apparatus may further include a buffer that sequentially stores internal commands generated by the command interpreting unit. The special command may include a command designating the number of internal commands stored in the buffer.

According to this disclosure, since the number of internal commands to be prepared in advance can be adjusted, in a case that the target trajectory is complex, the internal command needs to be updated in a short time, or the like, the situation that an internal command cannot be generated in time and the output of the instruction value is stopped can be avoided.

In the disclosure described above, the special command may be defined in accordance with a language format used for writing the application program.

According to this disclosure, a developer of the application program can use a special command without feeling uncomfortable.

In the disclosure described above, the internal command may be defined as a function representing a behavior of each motor between adjacent passage points set on the target trajectory.

According to this disclosure, the amount of calculation for outputting an instruction value by the instruction value output unit can be decreased.

According to another embodiment of the disclosure, a control method that can control one or a plurality of motors is provided. The control method includes: outputting an instruction value for the one or plurality of motors for each control period; and sequentially interpreting an application program including one or a plurality of commands defining a target trajectory and generating an internal command that is necessary for outputting the instruction value for each control period. The sequentially interpreting of an application program and generating of an internal command includes: calculating a passage point on the target trajectory for each period set in advance in accordance with a command included in the application program and generating the internal command in accordance with calculated passage points; and changing the period at which the passage points are calculated to a length designated by a special command in a case in which the special command defined in advance is executed in the sequential interpretation of the application program.

According to this disclosure, by adding a special command in association with a target command in accordance with the complexity of a target trajectory and the like, an execution form in which the control accuracy for a specific interval is improved and the processing speed is prioritized for the other sections can be realized. Accordingly, the demand for both the processing speed and the control accuracy can be achieved.

### BRIEF DESCRIPTION OF THE DRAWINGS

FIG. 1 is a schematic diagram illustrating one example of application situations of a control apparatus according to an embodiment;
FIG. 2(A) and FIG. 2(B) are schematic diagrams for respectively describing the processing details in the control apparatus according to this embodiment;
FIG. 3 is a schematic diagram illustrating an example of the overall configuration of the control system according to this embodiment;
FIG. 4 is a block diagram illustrating an example of the hardware configuration of the control apparatus according to this embodiment;
FIG. 5 is a schematic diagram illustrating one example of a program executing mechanism of the control apparatus according to this embodiment;
FIG. 6 is a timing diagram illustrating an example of a program executing operation in the control apparatus according to this embodiment;
FIG. 7(A) and FIG. 7(B) are schematic diagrams for describing one example of an internal command generating process executed in the control apparatus according to this embodiment;
FIG. 8 is a schematic diagram for describing factors relating to the internal command generating process in the control apparatus according to this embodiment;
FIG. 9 is a flowchart illustrating the sequence of an internal command generating process according to an application program in the control apparatus according to this embodiment;
FIG. 10 is a schematic diagram illustrating one example of the hardware configuration of a support apparatus according to this embodiment;
FIG. 11 is a schematic diagram illustrating one example of the functional configuration of the support apparatus according to this embodiment;
FIG. 12(A) and FIG. 12(B) are schematic diagrams respectively illustrating one example of a screen user interface provided by the support apparatus according to this embodiment;
FIG. 13 is a schematic diagram for describing a process of changing an application program in accordance with a user operation for the screen user interface illustrated in FIG. 13; and
FIG. 14 is a flowchart illustrating the sequence of the process of changing an application program using the support apparatus according to this embodiment.

### DESCRIPTION OF THE EMBODIMENTS

An embodiment of the disclosure will be described in detail with reference to the drawings. The same reference sign will be assigned to the same portions or corresponding portions, and description thereof will not be repeated.

### <A. Application example>

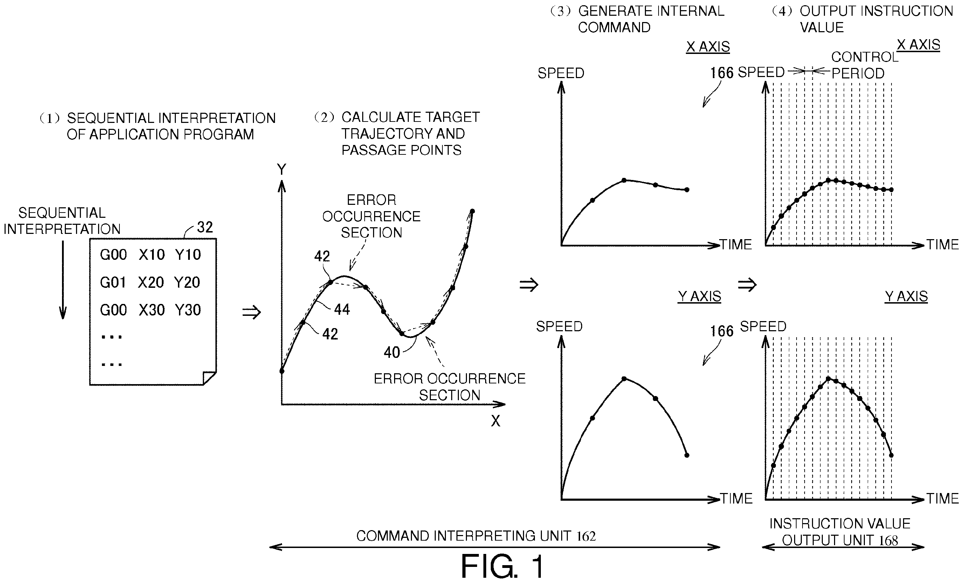

First, one example of situations in which the disclosure is applied will be described. FIG. 1 is a schematic diagram illustrating one example of application situations of a control apparatus 100 according to this embodiment.

The control apparatus 100 according to this embodiment can control one or a plurality of motors. More specifically, the control apparatus 100 sequentially interprets an application program 32 including one or a plurality of commands defining a target trajectory and outputs an instruction value for one or a plurality of motors that are control targets for each of control periods.

A "motor" according to the disclosure is a concept including a driving device of an arbitrary type such as a servo motor, a synchronous motor, or an induction motor. In addition, a "motor" according to the disclosure may include a device performing linear movement rather than rotary movement, for example, like a linear motor. For example, in a case in which a servo motor is driven, a servo driver is used, and an appropriate device driving a motor is selected in accordance with the type of motor.

In description presented here, a process and a function controlling an apparatus including one or a plurality of motors using an application program 32 will be collectively referred to as a "control application." This term "control application" is a concept including an apparatus or a machine executing specific processing or a specific operation, for example, using computer numerical control (CNC) and/or a robot and control thereof.

In description presented here, an "application program" includes a program configured by one or a plurality of commands used for realizing the "control application." The "application program" is a program representing the sequence of the control application and, for example, is written using a group of commands called G code in CNC and is written using a group of commands called M code in robot control. The "application program" is written using one or a plurality of commands defining a target trajectory, and an interpreter system in which blocks are interpreted one by one is employed at the time of execution.

The control apparatus 100, regarding a main functional configuration thereof, includes a command interpreting unit 162 and an instruction value output unit 168. An application program 32 is input to the command interpreting unit 162. FIG. 1 shows a numerical control program (hereinafter, also abbreviated to an "NC program") for executing computer numerical control, as one example of the application program 32.

The application program 32 includes one or a plurality of commands defining a target trajectory. In the example illustrated in FIG. 1, a target trajectory is defined by commands of blocks such as "G00 X10 Y10", "G01 X20 Y20", and "G01 X30 Y30." More specifically, "G00" and "G01" are commands defining operations (for example, linear movement, curved movement, spline movement, and the like), and "X10 Y10", "X20 Y20", and "X30 Y30" continued thereafter are one type of argument (in this example, coordinates representing a destination).

The command interpreting unit 162 sequentially interprets the application program 32 and generates an internal command 166. The internal command 166 is necessary for the output of an instruction value for each control period by the instruction value output unit 168. The command interpreting unit 162 corresponds to an interpreter used for the application program 32.

More specifically, first, the command interpreting unit 162 sequentially interprets the application program 32, as in item (1) about application program sequential interpretation. By sequentially interpreting commands included in the application program 32, a target trajectory 40 is calculated. The command interpreting unit 162 calculates a passage point 42 on the calculated target trajectory 40 for each period set in advance. Also in consideration of also a target speed for movement on the target trajectory 40, passage points 42 are calculated for a position to be present at for time intervals set in advance. In a case in which movement is started at time t = 0, the passage points 42 are sequentially set such as a passage point 42 at t = T, a passage point 42 at t = 2T, a passage point 42 at t = 3T ... are sequentially set.

In this way, the command interpreting unit 162 calculates a passage point 42 on the target trajectory 40 for each period set in advance in accordance with a command included in the application program 32, as in item (2) about target trajectory and passage point calculation.

Then, the command interpreting unit 162 calculates a movement path 44 joining the passage points 42 adjacent to each other on the target trajectory 40 and generates an internal command 166 for realizing the calculated movement path 44, as in item(3) about internal command generation.

In description presented here, an "internal command" is a concept including a command, a function, or the like causing the instruction value output unit 168 to output an instruction value at time intervals (control periods) set in advance. In the example illustrated in FIG. 1, the internal command 166 may be defined as a function representing the behavior of each motor for each time (elapsed time) section corresponding to a passage point 42 set on the target trajectory 40. An "internal command" typically may be defined in the form of a function defining a relation between a time and an instruction value. As an instruction value, for example, a position, a speed, an acceleration, a jerk, an angle, an angular velocity, an angular acceleration, an angular jerk, or the like may be used.

In this way, the command interpreting unit 162 generates internal commands 166 in accordance with the calculated passage points 42. In the example illustrated in FIG. 1, a case in which there are two motors used for respectively driving an X axis and a Y axis is illustrated. In other words, internal commands 166 for the two motors (an X-axis motor and a Y-axis motor) are respectively generated on the basis of the passage points 42 set on the target trajectory 40.

The instruction value output unit 168 outputs an instruction value for one or a plurality of motors for each control period in accordance with the internal commands 166 generated by the command interpreting unit 162, as in item (4) about instruction value output. As illustrated in FIG. 1, basically, internal commands 166 are defined for each time section (longer than one control period), and the instruction value output unit 168 calculates an instruction value for each control period in accordance with a corresponding internal command 166.

In addition, the command interpreting unit 162 sequentially interprets the application program 32, and the calculation of the target trajectory 40 and the calculation of the passage points are sequentially executed. As will be described later, in a case in which an internal command 166 corresponding to a specific passage point 42 is generated to increase the accuracy of the internal command 166, it is preferable to refer to information of one or a plurality of passage points 42 subsequent to this passage point 42 on the target trajectory 40.

In this way, hereinafter, referring to information of one or a plurality of passage points 42 continued from a passage point 42 at the time of generating an internal command 166 corresponding to an arbitrary passage point 42 will be also referred to as "looking ahead". Details of this "looking ahead" will be described later.

As illustrated in the target trajectory 40 illustrated in FIG. 1, in a case in which the target trajectory 40 defined by the application program 32 is more complex (in other words, a local change is relatively larger) in a section between passage points 42 adjacent to each other, there exists the case that the movement path 44 deviates from the target trajectory 40. In the example illustrated in FIG. 1, two sections in which an error occurs are generated in the target trajectory 40. In accordance with the generation of such sections in which an error occurs, the accuracy of the internal commands 166 is lowered, and the control accuracy may be lowered.

In order to prevent lowering of the control accuracy, a section width with which the passage points 42 are set on the target trajectory 40 may be decreased. However, as the section width is decreased, the number of set passage points 42 is increased, and the amount of calculation for generating the internal commands 166 may be increased. Thus, the control apparatus 100 according to this embodiment may change the processing accuracy at the time of generating an internal command 166 in accordance with a special command included in the application program 32. Such a special command, typically, includes a command adjusting a section width with which the passage points 42 are set (in other words a different time interval at which the passage points 42 are set).

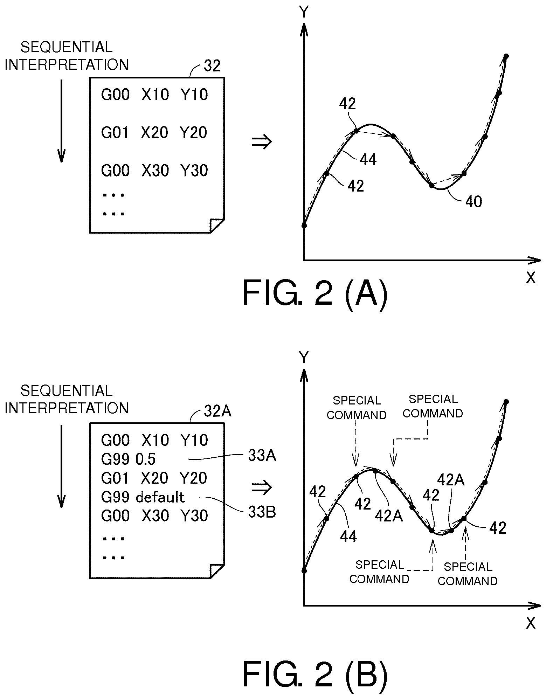

FIG. 2A and FIG.2B are schematic diagrams respectively showing the processing details in the control apparatus 100 according to this embodiment. FIG. 2(A) illustrates an example of the process of sequential interpretation of an application program 32 similar to that illustrated in FIG. 1. In this case, passage points 42 are set on the target trajectory 40 for each of periods set in advance.

In contrast to this, FIG. 2(B) illustrates an example of the process of a case in which an application program 32A acquired by adding special commands 33A and 33B to the application program 32 is sequentially interpreted.

A command "G99 0.5" that is a special command 33A defines setting of a section width for setting passage points 42 as "0.5" in the interpretation of commands after the command. On the other hand, a command "G99 default" that is a special command 33B defines a section width for setting passage points 42 to be returned to a default value in the interpretation of commands after the command. In this way, the special command 33B may include a command used for returning a period for calculating passage points 42 which has been changed to its original value.

Here, the method of setting a section width may use an absolute value or a relative value. For example, a command for setting a section width for setting passage points 42 to "0.5 msec" (millisecond) may be used, or a command for setting a section width to be decreased from a default value by "50%" may be used. In addition, a command used for shortening the section width may be used, or a command used for lengthening the section width may be used.

In the example illustrated in FIG. 2(B), a special command 33A is added before a command "G01 X20 Y20" present in a second block of the application program 32. In accordance with this special command 33A, for a section of a target trajectory calculated according to the execution of the command "G01 X20 Y20," the setting interval between passage points 42 is changed to a length designated by the special command 33A (as the interval between passage point 42 and passage point 42A).

In addition, a special command 33B is added before a command "G00 X30 Y30" present in a third block of the application program 32. In accordance with this special command 33B, for a section of a target trajectory calculated according to the execution of the command "G00 X30 Y30," the set interval between passage points 42 is returned to the original length designated by the special command 33B.

By adding the special commands 33A and 33B to the application program 32A, the section width of passage points 42 set on the target trajectory can be adjusted as necessary. In this way, when the special commands 33A and 33B are executed, the command interpreting unit 162 interprets one or a plurality of commands used after the special commands 33A and 33B in the application program 32 in accordance with the designation using the special commands 33A and 33B.

In the example illustrated in FIG. 2A and FIG.2B, when the special commands 33A and 33B defined in advance are executed (in other words, encountered) in the sequential interpretation of the application program 32A, the command interpreting unit 162 changes a period (section width) for calculating passage points 42 to lengths respectively designated by the special commands 33A and 33B.

In this way, by adjusting the time interval for setting passage points 42 in accordance with the complexity of the target trajectory, the demand for both the processing speed and the control accuracy can be satisfied. In other words, in a case in which the complexity of the target trajectory is relatively low, the time interval for setting passage points 42 is set to be relatively long, and the processing speed is prioritized. On the other hand, in a case in which the complexity of the target trajectory is relatively high, the time interval for setting passage points 42 is set to be relatively short, and the control accuracy can be prioritized.

By employing the configuration for satisfying the demand for both the processing speed and the control accuracy, the calculation resources of the control apparatus 100 can be optimized. In other words, in order to realize a control application, unnecessarily large calculation resources are not required.

### <B. Example of overall configuration of control system>

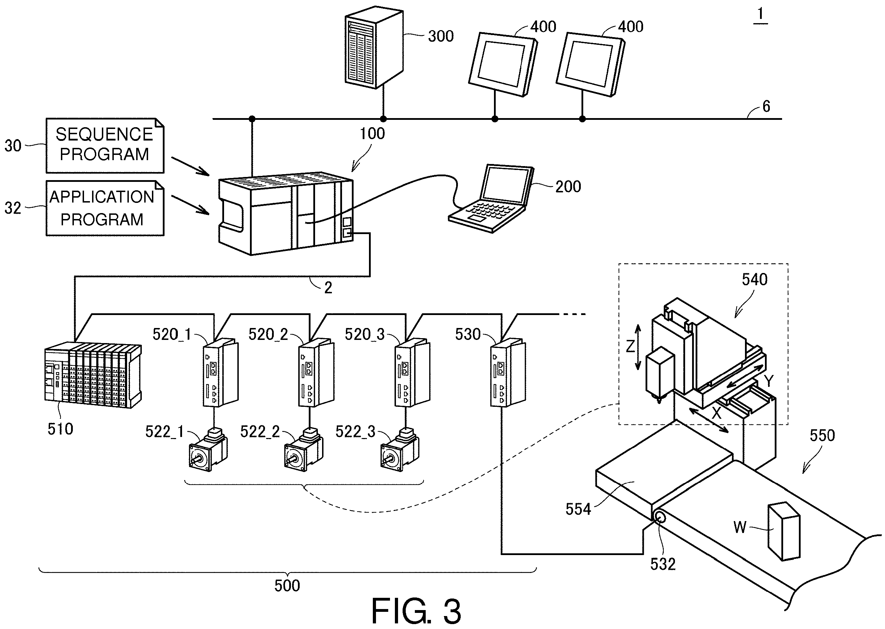

Next, an example of the overall configuration of a control system 1 including the control apparatus 100 according to this embodiment will be described. FIG. 3 is a schematic diagram illustrating an example of the overall configuration of the control system 1 according to this embodiment. FIG. 3 illustrates the control system 1 centered on the control apparatus 100 according to this embodiment.

The control apparatus 100 corresponds to an industrial controller controlling various targets such as various facilities and apparatuses. The control apparatus 100 is one type of computer executing control operations as will be described later and, typically, may be realized by a programmable controller (PLC). The control apparatus 100 may be connected to various field devices 500 through a field network 2. The control apparatus 100 exchanges data with one or a plurality of field devices 500 through the field network 2 or the like. Generally, the "field network" is also referred to as a "field bus" and, for the simplification of description, in description presented below, these will be collectively referred to as a "field network". In other words, a "field network" used here is a concept including a "field bus" in addition to a "field network" in the narrow sense.

The control operation executed in the control apparatus 100 includes: a process of collecting data (input data) that is collected or generated by the field device 500 (input process); a process (arithmetic operation process) of generating data (output data) such as an instruction value for the field device 500; a process (output process) of transmitting the generated output data to the target field device 500; and the like.

The field network 2 preferably employs a bus or a network executing fixed-cycle communication. As examples of a bus or a network executing such fixed-cycle communication, EtherCAT (registered trademark), EtherNet/IP (registered trademark), DeviceNet (registered trademark), CompoNet (registered trademark), and the like are known. EtherCAT (registered trademark) is preferable from a viewpoint that the arrival time of data is assured.

An arbitrary field device 500 can be connected to the field network 2. The field device 500 includes an actuator applying a certain physical action to a manufacturing apparatus, a production line, or the like on the field side, an input/output device exchanging information with the field, and the like.

Data is exchanged between the control apparatus 100 and the field device 500 through the field network 2, and such exchanged data is updated at a very short period of the order of several hundreds µsec (micro second) to the order of several tens of msec (millisecond).

In the example of the overall configuration illustrated in FIG. 3, the control apparatus 100 controls a CNC machine tool 540 and a conveyance apparatus 550 supplying a work W to the CNC machine tool 540.

The CNC machine tool 540 processes an arbitrary target object by controlling a machining center and the like in accordance with an NC program designating a position, a speed, and the like. The CNC machine tool 540 is not limited to that illustrated in the drawing and may be applied to arbitrary machining devices for lathe machining, milling machining, electric discharge machining, and the like.

The CNC machine tool 540 and the conveyance apparatus 550 are driven in accordance with instruction values supplied from the control apparatus 100. A work W conveyed by the conveyance apparatus 550 is disposed on a workbench 554 and processing designated by the CNC machine tool 540 is executed.

In the example of the overall configuration illustrated in FIG. 3, the field device 500 includes a remote input/output (I/O) device 510, servo drivers 520_1, 520_2, and 520_3, servo motors 522_1, 522_2, and 522_3, and a servo driver 530. The control apparatus 100 is configured to be able to control such motors.

The remote I/O device 510, typically, includes: a communication coupler used for executing communication through the field network 2; and an input/output unit (hereinafter, also referred to as an "I/O unit") used for acquiring input data and outputting output data. The remote I/O device 510 may connect to devices for collecting input data such as an input relay and various sensors (for example, an analog sensor, a temperature sensor a vibration sensor, and the like), and may also connect to devices for applying certain actions to the fields such as an output relay, a contactor, a servo driver, and any other arbitrary actuator.

The field device 500 is not limited to the device described above, an arbitrary device (for example, a visual sensor or the like) which is capable of collecting input data, an arbitrary device (for example, an inverter device or the like) which is capable of applying a certain action according to output data, various robots, or the like may be employed.

The servo motors 522_1, 522_2, and 522_3 are built in as parts of the CNC machine tool 540, and the servo driver 530 drives a servo motor 532 connected to a conveyor of the conveyance apparatus 550. The servo drivers 520_1 to 520_3 and 530 drive the corresponding servo motors in accordance with instruction values (for example, a position instruction value, a speed instruction value, and the like) supplied from the control apparatus 100.

As an example, in the example of the overall configuration illustrated in FIG. 3, the servo motors 522_1, 522_2, and 522_3 are driving sources along the X axis, the Y axis, and the Z axis of the CNC machine tool 540 and, for example, are frequently controlled integrally for such axes.

The control apparatus 100 according to this embodiment can execute a sequence program 30 and an application program 32 in parallel. In other words, the control apparatus 100 outputs instruction values determined according to a sequence command and a motion command by executing the sequence program 30 and outputs instruction values used for controlling the behaviors of the CNC machine tool 540 and a robot by executing the application program 32. In addition, the start of the execution, the end of the execution, and the like of the application program 32 may be controlled using a control command included in the sequence program 30.

In descriptions presented here, a "sequence program" is a concept including a program of which the entirety is scanned at each time of execution and one or a plurality of instruction values is generated therefrom for each time of execution. The "sequence program" includes a program configured by one or a plurality of commands described according to the international standard IEC61131-3 regulated by the international electrotechnical commission (IEC). The "sequence program" may include a sequence command and/or a motion command. The "sequence program" is not limited to a command described according to the international standard IEC61131-3 and may be configured to include commands that are independently defined by a manufacturing company, a vendor, or the like of a programmable controller (PLC). In this way, the "sequence program" is appropriate for control requiring immediacy and high speed.

In description presented here, basically, a "sequence command" is a term including one or a plurality of commands described by one or a plurality of logic circuits for calculating input values, output values, internal values, and the like. Basically, in one control period, the "sequence command" is executed from the start to the end, and, in the next control period, the "sequence command" is executed again from the start to the end. In description presented here, a "motion command" is a term including one or a plurality of commands used for calculating numerical values of a position, a speed, acceleration, a jerk, an angle, an angular velocity, an angular acceleration, an angular jerk, and the like as instructions for an actuator such as a servo motor. Also for the "motion command," a program of a motion command (motion program) described by a functional block, a numerical value calculation equation, or the like is executed from the start to the end thereof in one control period. In other words, an instruction value is calculated (updated) for each control period.

The control apparatus 100 is connected also to other apparatuses through a higher-order network 6. The higher-order network 6 may employ Ethernet (registered trademark) or EtherNet/IP (registered trademark) that are general network protocols. More specifically, one or a plurality of server apparatuses 300 and one or a plurality of display devices 400 may be connected to the higher-order network 6.

As the server apparatus 300, a database system, a manufacturing execution system (MES), or the like may be assumed. The manufacturing execution system acquires information from manufacturing apparatuses and facilities that are control targets, and, at the same time, monitors and manages the whole production. In addition, The manufacturing execution system can handle order information, quality information, shipment information, and the like. However, the disclosure is not limited thereto, and an apparatus providing an information system service may be connected to the higher-order network 6. As the information system service, a process of acquiring information from manufacturing apparatuses and facilities that are control targets and executing a macro or micro analysis or the like may be considered. For example, data mining or machine leaning techniques may be assumed. Data mining may extract a specific characteristic trend included in the information supplied from manufacturing apparatuses and facilities, and a machine leaning tool may be used for executing machine learning based on information supplied from facilities and machines, and the like may be considered.

The display device 400 receives an operation from a user, outputs a command and the like according to the user operation to the control apparatus 100, and graphically displays a calculation result or the like acquired by the control apparatus 100.

A support apparatus 200 can be connected to the control apparatus 100. The support apparatus 200 is an apparatus that supports preparation that is necessary for the control apparatus 100 to control the control targets. More specifically, the support apparatus 200 provides a function of outputting development environments (a program generation editing tool, a parser, a compiler, and the like) of a program executed by the control apparatus 100, setting environments for setting the configuration information (arrangement) of the control apparatus 100 and various devices connected to the control apparatus 100, and the generated user program to the control apparatus 100, a function of correcting and changing a user program executed on the control apparatus 100 and the like online, and the like.

### <C. Example of hardware configuration of control apparatus>

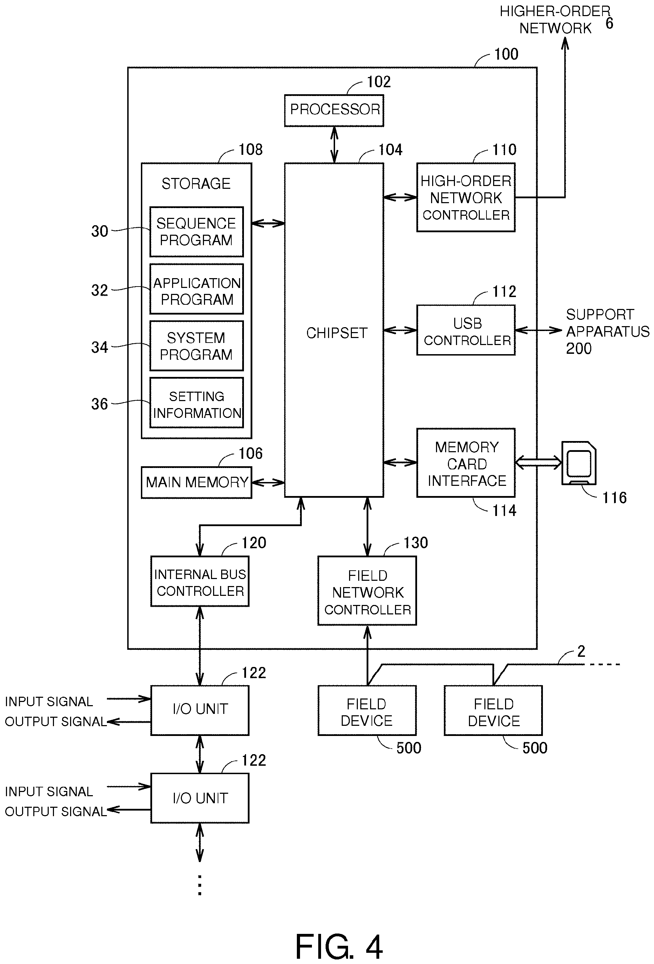

Next, the example of the hardware configuration of the control apparatus 100 according to this embodiment will be described. FIG. 4 is a block diagram illustrating an example of the hardware configuration of the control apparatus 100 according to this embodiment.

Referring to FIG. 4, the control apparatus 100 is an operation processing unit called a CPU (Central Processing Unit) and includes: a processor 102; a chipset 104; a main memory 106; a storage 108; a higher-order network controller 110; a universal serial bus (USB) controller 112; a memory card interface 114; an internal bus controller 120; and a field network controller 130.

The processor 102 may be a central processing unit (CPU), a micro processing unit (MPU), a graphics processing unit (GPU), or the like. The processor 102 may also employ a plurality of cores for processing. The control apparatus 100 may also have a plurality of processors 102. The chipset 104 realizes the operation of the control apparatus 100 as a whole by controlling the processor 102 and peripheral elements or parts. The main memory 106 may be configured by a volatile memory device such as a dynamic random access memory (DRAM) or a static random access memory (SRAM). The storage 108, for example, may be configured by a nonvolatile memory device such as a hard disk drive (HDD) or a solid state drive (SSD).

The processor 102 reads various programs stored in the storage 108 and expands and executes these programs stored in the main memory 106, thereby realizing control corresponding to the control targets and various processes to be described later hereafter. The storage 108 stores a system program 34 for realizing basic functions, and also stores user programs (the sequence programs 30 and the application program 32) generated in accordance with manufacturing apparatuses and facilities that are control targets, and also stores setting information 36.

The higher-order network controller 110 controls exchange of data with the server apparatus 300, the display device 400 (see FIG. 4), and the like through the higher-order network 6. The USB controller 112 controls exchange of data with the support apparatus 200 through a USB connection.

The memory card interface 114 is configured such that a memory card 116 can be detachably attached thereto and can write data to the memory card 116 and read various kinds of data (a user program, trace data, and the like) from the memory card 116.

The internal bus controller 120 controls exchange of data with the I/O unit 122 mounted in the control apparatus 100. The field network controller 130 controls exchange of data with a field device through the field network 2.

While an example of the configuration in which necessary functions are provided with execution of programs by the processor 102 is illustrated in FIG. 4, some or all of such functions provided may be implemented with using a dedicated hardware (for example, an ASIC, an FPGA, or the like). Alternatively, a main part of the control apparatus 100 may be realized by using hardware configured by a general architecture (for example, an industrial PC on the basis of a general computer). In such a case, by using a virtualization technology, a plurality of operating systems (OS) having different purposes may be executed in parallel, and a necessary application may be executed on each OS.

In the control system 1 illustrated in FIG. 3, although the control apparatus 100, the support apparatus 200, and the display device 400 are configured as separate bodies, a configuration in which some or all of such functions integrated together in a single apparatus may be employed in one embodiment.

### <D. Program executing mechanism>

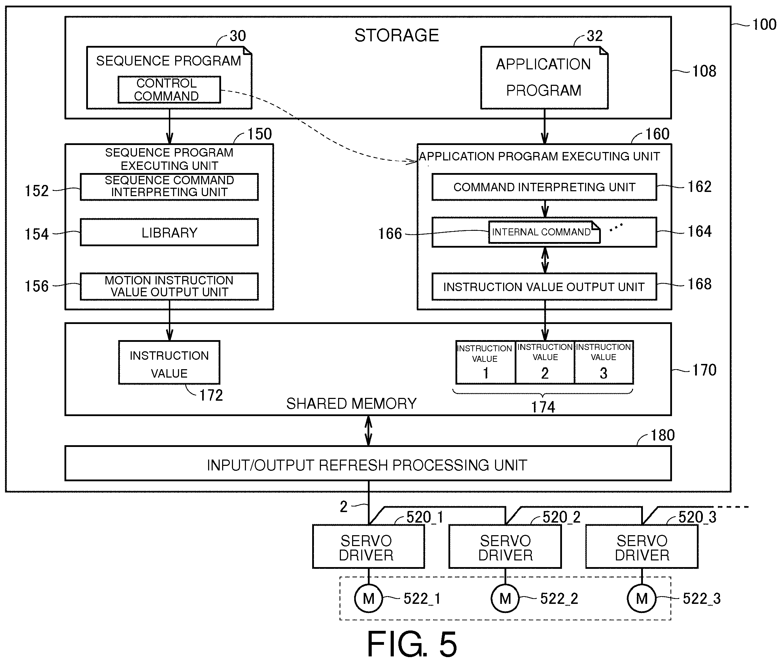

Next, an example of a program executing mechanism of the control apparatus 100 according to this embodiment will be described. FIG. 5 is a schematic diagram illustrating one example of a program executing mechanism of the control apparatus 100 according to this embodiment.

Referring to FIG. 5, the control apparatus 100 includes a sequence program executing unit 150 an application program executing unit 160. The sequence program executing unit 150 outputs an instruction value by executing the sequence program 30. The application program executing unit 160 outputs an instruction value by executing the application program 32.

More specifically, the sequence program executing unit 150 includes: a sequence command interpreting unit 152; a library 154; and a motion instruction value output unit 156.

The sequence command interpreting unit 152 interprets sequence commands included in the sequence program 30 and executes a designated sequence arithmetic operation (logic operation). The library 154 provides a code corresponding to a control command other than a simple sequence included in the sequence program 30. For example, in a case in which the sequence program 30 can be described using a functional block capable of executing multiple processes, a code that is necessary for interpreting and executing the functional block is acquired by referring to the sequence program 30.

The motion instruction value output unit 156 calculates an instruction value in accordance with a motion command included in the sequence program 30. The motion command defines calculation of an instruction value over a plurality of control periods using one command. The motion instruction value output unit 156 interprets such a motion command and updates the motion instruction value for each control period.

One or a plurality of instruction values 172, calculated during each control period by the sequence command interpreting unit 152 and the motion instruction value output unit 156 of the sequence program executing unit 150, is output to a shared memory 170. The one or plurality of instruction values 172, typically, includes on/off of a digital output determined in accordance with a sequence command and an analog output calculated in accordance with a motion command.

The application program executing unit 160 executes the application program 32 in an interpreter mode and outputs an instruction value for each motor. The calculation (update) of an instruction value using the application program executing unit 160 is repeatedly executed for each control period. In this way, the application program executing unit 160 calculates an instruction value according to the application program 32 in synchronization with the calculation of the instruction value using the sequence program executing unit 150. In order to realize the calculation of an instruction value for each control period, the application program executing unit 160 generates an internal command 166 used for calculating the instruction value.

More specifically, the application program executing unit 160 includes a command interpreting unit 162, a buffer 164, and an instruction value output unit 168.

The command interpreting unit 162 sequentially interprets the application program 32 and generates an internal command 166. The command interpreting unit 162 sequentially stores the generated internal command 166 in the buffer 164. The command interpreting unit 162 executes generation of the internal command 166 from the application program 32 in advance to some degrees. The internal commands 166 generated by the command interpreting unit 162 are sequentially stored in the buffer 164. For this reason, it may occur in a state that a plurality of internal commands 166 are stored in the buffer 164. In this embodiment, the command interpreting unit 162 generates a target trajectory and internal commands 166 for calculating the instruction value 174 and thus may be referred to as a "planner."

The instruction value output unit 168 calculates an instruction value 174 for each control period in accordance with the internal command 166 generated by the command interpreting unit 162 in advance. Generally, a command (code) described in the application program 32 is sequentially interpreted, and thus there is no assurance that the instruction value 174 can be output for each control period. However, by using the internal command 166, the output of the instruction value 174 for each control period can be realized.

The command interpreting unit 162 sequentially queues the generated internal commands 166 in the buffer 164, and the instruction value output unit 168 reads the internal commands 166 in order of being queued in the buffer 164.

The instruction value 174 calculated for each control period by the instruction value output unit 168 of the application program executing unit 160 is output to the shared memory 170.

The input/output refresh processing unit 180, for each control period, transmits output data including the instruction value 172 and the instruction value 174 to the field side and acquires input data such as a measured value from the field side. In description presented here, exchange of input data and output data between the control apparatus 100 and the field side will be also referred to as an "input/output refresh process."

By employing the configuration as illustrated in FIG. 5, the instruction value 172 calculated in accordance with the execution of the sequence program 30 and the instruction value 174 calculated in accordance with the execution of the application program 32 can be output in synchronization with each other for each control period. Accordingly, control with high accuracy can be realized also for all the control targets including the machine tool and the robot.

### <E. Example of execution operation of program>

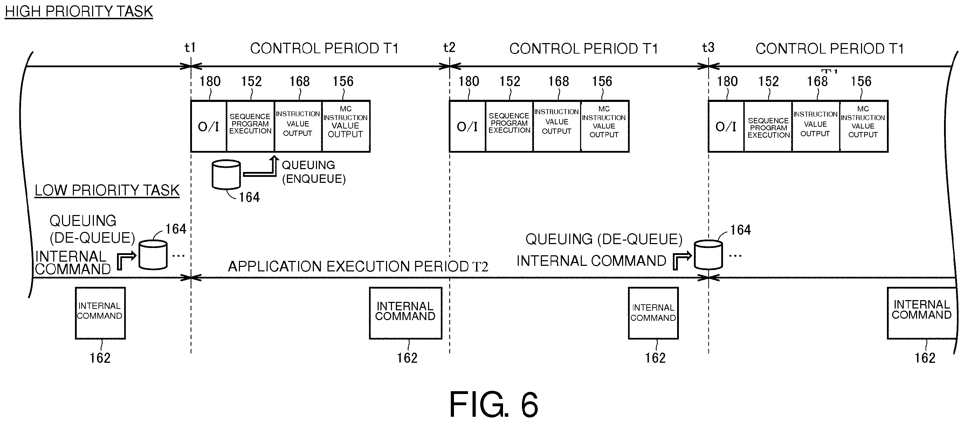

Next, an example of a program executing operation in the control apparatus 100 according to this embodiment will be described. FIG. 6 is a timing diagram illustrating an example of a program executing operation in the control apparatus 100 according to this embodiment. As one example, FIG. 6 illustrates an example in which a plurality of tasks is set for each priority level, and each of the tasks shares the resources of the processor 102 in accordance with each priority level.

Referring to FIG. 6, as high priority tasks, four processes including (1) an input/output refresh process executed by the input/output refresh processing unit 180, (2) an instruction value output process according to the execution of the sequence program 30 using the sequence command interpreting unit 152 of the sequence program executing unit 150, (3) an instruction value output process using the instruction value output unit 168 of the application program executing unit 160, and (4) an instruction value output process using the motion instruction value output unit 156 of the sequence program executing unit 150 are set.

As a low priority task, a sequential interpretation of the application program 32 and an internal command generating process using the command interpreting unit 162 of the application program executing unit 160 are set.

The high priority task is repeatedly executed for each control period T1 set in advance. The low priority task is appropriately executed in a period in which the high priority task is not executed. In other words, for each control period, a high priority task execution time is assigned, and a low priority task is executed in a time other than the time for the high task. The low priority task is sequentially executed for each application execution period T2 (basically, an integer multiple of the control period T1) set in advance.

First, the high priority task will be described. When it arrives at each control period, first, after the input/output refresh process is executed, the sequence command interpreting unit 152 executes (scans) the whole sequence program 30 and outputs one or a plurality of instruction values 172 following the sequence command. In addition, the instruction value output unit 168 reads (de-queues) the internal command 166 from the buffer 164 and calculates an instruction value for the control period. In addition, the motion instruction value output unit 156 calculates one or a plurality of instruction values for a motion command in accordance with the motion command included in the sequence program 30. Thereafter, a process similar thereto is repeated for each control period.

In addition, a timing at which the instruction value output unit 168 reads the internal command 166 from the buffer 164 (de-queuing timing) may not be for each control period T1. This is because that the read internal command 166 frequently includes a command that can be used for calculating an instruction value over a plurality of control periods.

In this way, when the execution of a high priority task is completed in a certain control period T1, a set of an instruction value following the sequence command, an instruction value following the motion command, and an instruction value following the control application is prepared. Such instruction values are, basically, reflected to the field side when the next control period T1 arrives. In other words, the sequence program executing unit 150 and the application program executing unit 160 calculate instruction values according to input data in the same control period and thus can realize an output synchronized with the input.

In FIG. 6, for the convenience of description, although an example in which the execution of the sequence program 30, the process of calculating an instruction value using the instruction value output unit 168, and the process of calculating an instruction value using the motion instruction value output unit 156 are sequentially executed is illustrated, the execution order may be appropriately changed, or each process may be further divided into sub processes to be alternately executed. In other words, until start of the execution of the next input/output refresh process after completion of the execution of a preceding input/output refresh process, data to be output as external data including an instruction value may be calculated.

Meanwhile, the low priority task will be described. The command interpreting unit 162 of the application program executing unit 160 sequentially interprets the application program 32. In other words, the command interpreting unit 162 reads and interprets the application program 32 with low priority. The internal commands 166 are generated by executing an interpretation process of the application program 32 by the command interpreting unit 162. The generated internal commands 166 are sequentially queued (enqueued) in the buffer 164. Each of the internal commands 166 queued in the buffer 164 is referred to every time by the instruction value output unit 168 and is used for the generation of an instruction value.

By queuing internal commands 166 corresponding to an integer multiple of the control period that is a calculation period of the high priority task in advance, the command interpreting unit 162 can realize the calculation of an instruction value for each control period using the instruction value output unit 168.

By executing an interpretation process of the application program 32 in advance, the command interpreting unit 162 of the application program executing unit 160 may generate sufficient internal commands 166 to be referred to for the calculation of an instruction value by the instruction value output unit 168 in surplus.

The command interpreting unit 162 of the application program executing unit 160 executes a data synchronization process for synchronization with the sequence program executing unit 150 for each application execution period T2 set in advance. For this reason, in each program executing operation, the command interpreting unit 162 only reads and interprets commands that can be processed within the application execution period T2 among commands included in the application programs 32.

In the control apparatus 100 according to this embodiment, for any one of the sequence program 30 that is repeatedly executed (scanned) and the application program 32 that is sequentially interpreted, the process of calculating an instruction value is executed for each control period, and accordingly, the process of mutually referring to calculation results between the two programs having different characteristics and the process of arranging calculation results output by the programs can be easily executed.

### <F. Internal command generating process>

Next, an example of a process relating to the sequential interpretation of the application program 32 and the generation of an internal command 166 by using the command interpreting unit 162 of the application program executing unit 160 will be described.

The control apparatus 100 calculates a target trajectory by sequentially interpreting commands included in the application program 32. A section length and the like on the defined target trajectory are changed for each command. For this reason, it is not easy to calculate an instruction value for each control period while the application program 32 is sequentially interpreted.

Thus, in the control apparatus 100 according to this embodiment, the command interpreting unit 162 of the application program executing unit 160 interprets one or a plurality of commands described in the application program 32 and generates an internal command 166 used for calculating an instruction value for each control period on the basis of the interpreted details. Generated internal commands 166 are sequentially queued in the buffer 164 of the application program executing unit 160.

The internal command 166 may have a function that can calculate an instruction value by using a variable relating to a time as an input in one example. In other words, the internal command 166 may be a function of outputting an instruction value for each control period using the instruction value output unit 168. More specifically, the internal command 166 may be a function of defining a relation between the time and the instruction value. As a variable relating to a time used for defining the internal command 166, time, an elapsed time after a specific reference timing, the number of accumulated cycles of the control period, or the like may be used.

By using such a function, the instruction value output unit 168 can output an instruction value for each control period by sequentially referring to each of the generated internal commands 166.

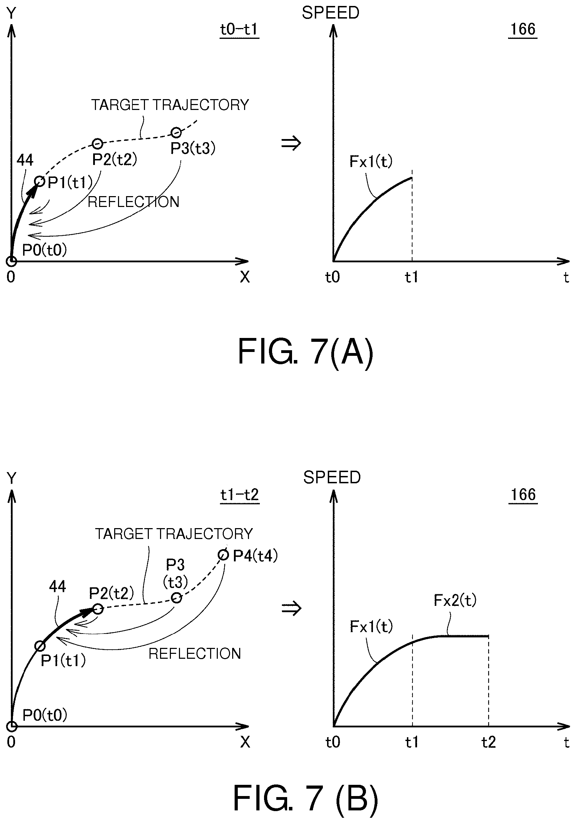

FIG. 7(A) and 7(B) are schematic diagrams for respectively describing examples of the process of generating the internal command 166 executed in the control apparatus 100 according to this embodiment. FIG. 7(A) illustrates a processing sequence for generating an internal command 166 in a period from time t0 to time t1, and FIG. 7(B) illustrates a processing sequence for generating an internal command 166 in a period from time t1 to time t2.

Referring to FIG. 7(A), the command interpreting unit 162 sequentially determines a target trajectory by sequentially interpreting the application program 32. For the target trajectory that is sequentially determined, the command interpreting unit 162 sequentially calculates a passage point for each period set in advance. Each passage point is calculated on the basis of a movement distance on the target trajectory and a movement speed on the target trajectory.

In the example illustrated in FIG. 7(A), in addition to a passage point P0(t0) that is an initial position at time t0, a passage point P1(t1) at time t1, a passage point P2(t2) at time t2, and a passage point P3(t3) at time t3 are calculated.

The command interpreting unit 162 calculates a movement path 44 from the passage point P0(t0) to the passage point P1(t1) on the basis of information of the passage points P0(t0), P1(t1), P2(t2), and P3(t3). The command interpreting unit 162 generates an internal command Fx1(t) from the calculated movement path 44. Although only the internal command Fx1(t) is illustrated in FIG. 7(A), actually, internal commands 166 are generated in corresponding to the number of motors to be simultaneously controlled.

In addition, in the calculation of the movement path 44, only information of the passage point P0(t) and the passage point P1(t1) may be used. Here, in order to calculate a more accurate and smooth movement path 44, information of one or a plurality of passage points subsequent to the passage point P1(t1) may be reflected. In other words, the control accuracy can be improved by generating the internal command 166 using a "looking ahead" operation.

Referring to FIG. 7(B), for a period from time t1 to time t2, the command interpreting unit 162 determines a further forward target trajectory by further interpreting the application program 32. The command interpreting unit 162 calculates a new passage point for the determined further forward target trajectory. In other words, the command interpreting unit 162 newly calculates a passage point P4 (t4).

Then, the command interpreting unit 162 calculates a movement path 44 from the passage point P1(t1) to the passage point P2(t2) on the basis of information of the passage points P1(t1), P2(t2), P3(t3), and P4(t4). The command interpreting unit 162 generates an internal command Fx2(t) from the calculated movement path 44. In FIG. 7(B), although only the internal command Fx2(t) is illustrated, actually, internal commands 166 corresponding to the number of motors to be simultaneously controlled are generated.

As illustrated in FIG. 7, in the "looking ahead" operation, the command interpreting unit 162 generates an internal command 166 corresponding to an interval between passage points 42 adjacent to each other on the target trajectory 40 on the basis of information of a plurality of passage points 42 continued from the passage points 42 adjacent to each other on the target trajectory 40.

By repeating the processing sequence as above, internal command for realizing the target trajectory are sequentially generated.

By employing the process of generating such internal commands, a control instruction for realizing the target trajectory defined by the application program can be output for each control period.

### <G. Factor relating to generation of internal command and special command>

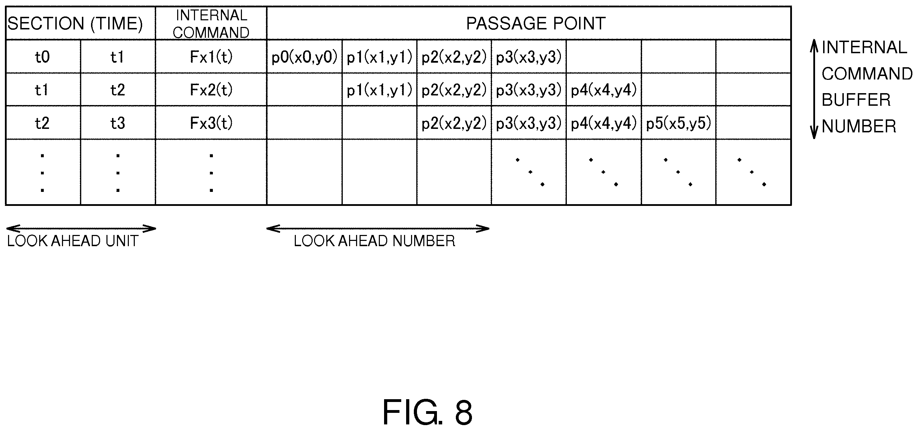

In the generation of the internal command 166 as described above, information of a plurality of passage points are necessary for each section. Hereinafter, factors relating to the generation of the internal command 166 will be described. FIG. 8 is a schematic diagram for describing factors relating to the process of generating the internal command 166 in the control apparatus 100 according to this embodiment.

Referring to FIG. 8, in generating the internal command 166 of each section, information of passage points corresponding to the section and information of preceding passage points of the section are necessary. In order to sequentially advance a section that is a target for generating the internal command 166, it is necessary to sequentially update the information of passage points.

As described with reference to FIG. 1, FIG.2(A) and FIG.2(B) as above, in this embodiment, the section width (a time interval at which the passage point 42 is set) for setting the passage point 42 can be adjusted. Such a section width will be referred to as a "looking ahead unit." By shortening this time interval, the accuracy of the target trajectory can be improved.

In addition, in order to execute the looking ahead operation as described above, it is necessary to maintain information of a plurality of passage points. The number of passage points used for executing the looking ahead operation will be referred to as a "looking ahead number". By securing a large looking ahead number, generation of the internal command 166 having high accuracy can be realized.

In addition, the instruction value output unit 168 outputs an instruction value by referring to the internal command 166. For this reason, it is preferable for the internal command 166 to queue many internal commands in the buffer 164 in advance. In addition, by not only referring to the internal commands 166 to be currently referred to but also referring to the following internal commands 166 after that, the instruction value output unit 168 can output an instruction value that is more accurate and smooth. The number of internal commands 166 queued in the buffer 164 will be referred to as an "internal command buffer number."

"Looking ahead unit," "looking ahead number," and "internal command buffer number" illustrated in FIG. 8 are significant factors for realizing movement along the target trajectory. In this embodiment, such factors can be controlled in accordance with a special command included in the application program 32.

The following content is used for describing one example of a special command included in the application program 32 input to the control apparatus 100 according to this embodiment.

(A) G99 0.5; (B) G99 0.5 5 6; (C) G991 0.5; (D) G 992 5; (E) G993 6

In the item (A), one example of a special command used for changing only the looking ahead unit is illustrated. The special command illustrated in item (A) is similar to the special command 33A illustrated in FIG. 2 described above and defines a setting of the looking ahead unit for setting passage points 42 to "0.5."

Item (B) illustrates one example of a special command for setting the looking ahead unit, the looking ahead number, and the internal command buffer number. "0.5," "5," and "6" continued from a command "G99" illustrated in the item (B) respectively represent the looking ahead unit, the looking ahead number, and the internal command buffer number.

Items (C) to (E) illustrate examples of special commands for setting the looking ahead unit, the looking ahead number, and the internal command buffer number.

"G991" illustrated in the item (C) is a command used for setting the looking ahead unit, and "0.5" continued from "G991" represents the value of the looking ahead unit to be set.

"G992" illustrated in the item (D) is a command for setting the looking ahead number, and "5" continued from "G992" represents the looking ahead number to be set. In this way, the special command may include a command for designating the number of passage points 42 that are necessary for the generation of an internal command 166.

"G993" illustrated in the item (E) is a command for setting the internal command buffer number, and "6" continued from "G993" represents the value of the internal command buffer number to be set. In this way, the special command may include a command for designating the number of internal commands 166 stored in the buffer 164.

The special commands illustrated in the items (A) to (E) are merely examples, and arbitrary special commands may be defined. In addition, the special commands may be defined in advance in accordance with a language format used for writing the application program 32. By employing such special commands according to the language format, a developer of the application program can use the special commands without feeling uncomfortability.

As above, the control apparatus 100 according to this embodiment can change the processing speed relating to the generation of the internal command and the control accuracy of the internal command by using the special commands included in the application program 32.

### <H. Process of interpreting application program 32>

Next, the process of interpreting the application program 32 executed by the control apparatus 100 according to this embodiment will be described.

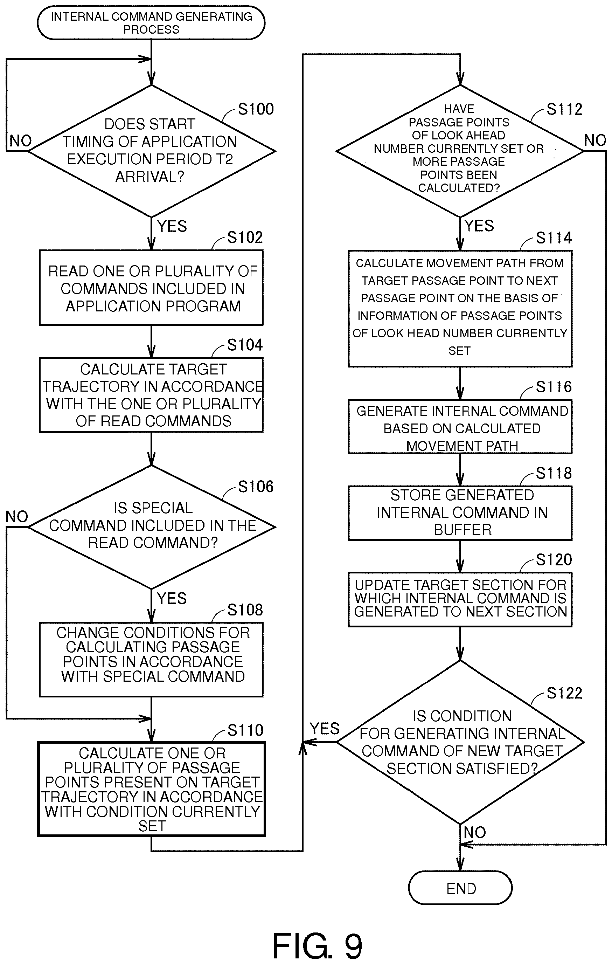

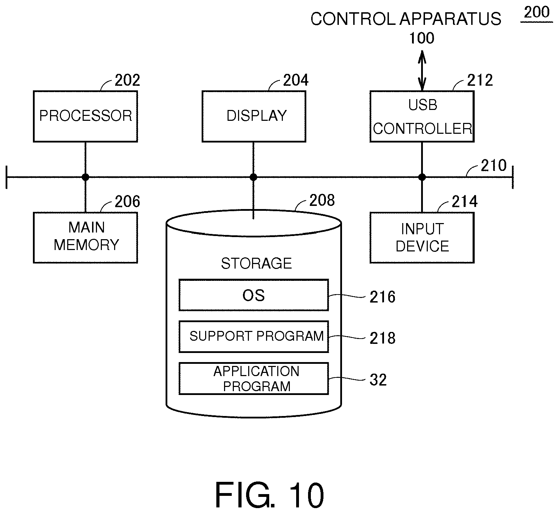

FIG. 9 is a flowchart illustrating the sequence of the process of generating an internal command 166 according to an application program 32 in the control apparatus 100 according to this embodiment. FIG. 10 illustrates a processing sequence executed when the command interpreting unit 162 of the application program executing unit 160 sequentially interprets the application program 32, and the command interpreting unit 162 is realized when the processor 102 of the control apparatus 100 executes the system program 34. The processing sequence illustrated in FIG. 10 is repeated for each application execution period T2.

Referring to FIG. 9, when it arrives at the start timing of the application execution period T2 (in the case of "Yes" in Step S100), the command interpreting unit 162 reads one or a plurality of commands included in the application program 32 (Step S102). The command interpreting unit 162 calculates a target trajectory according to the one or plurality of command that have been read (Step S104).

The command interpreting unit 162 determines whether or not a special command is included in the one or plurality of commands that have been read (Step S106). In a case in which the special command is included (in the case of "Yes" in Step S106), the command interpreting unit 162 changes conditions for calculating a passage point 42 in accordance with the special command (Step S108). On the other hand, in a case in which no special command is included (in the case of "No" in Step S106), the process of Step S108 is skipped.

The command interpreting unit 162 calculates one or a plurality of passage points present on the calculated target trajectory in accordance with the conditions (looking ahead unit) that are currently set (Step S110). Then, the command interpreting unit 162 determines whether or not passage points of the looking ahead number, which is currently set, or more have been calculated for a target section (Step S112).

In a case in which passage points of the looking ahead number or more have been calculated (in the case of "Yes" in Step S112), the command interpreting unit 162 calculates a movement path 44 from a passage point of the target to a next passage point on the basis of information of passage points corresponding to the looking ahead number that is currently set (Step S114) and generates an internal command 166 on the basis of the calculated movement path 44 (Step S116). The command interpreting unit 162 stores the generated internal command 166 in the buffer 164 (Step S118).

The command interpreting unit 162 updates a target section for which the internal command 166 is generated with a next section (Step S120). Subsequently, the command interpreting unit 162 determines whether or not generation conditions of the internal command 166 for a new target section are satisfied (Step S122). In a case in which the generation conditions of the internal command 166 for the new target section are satisfied (in the case of "Yes" in Step S122), the processes of Step S112 and subsequent steps are repeated.

On the other hand, in a case in which the generation conditions of the internal command 166 for the new target section are not satisfied (in the case of "No" in Step S122), the process ends.

In addition, in a case in which passage points of the looking ahead number or more have not been calculated (in the case of "No" in Step S112), the processes of Steps S114 to S122 are skipped. Then, the process ends.

By repeating the process as described above for each application execution period T2, internal commands 166 are sequentially generated. The instruction value output unit 168 of the application program executing unit 160 outputs an instruction value for each control period on the basis of each of the internal commands 166 that are sequentially generated.

### <I. Addition of special command to application program 32>

Next, one example of a method of adding the special command as described above to the application program 32 will be described.

Although the special command can be added to an arbitrary position of the application program 32, there are also cases in which it is difficult to intuitively understand a position at which the special command is to be added. Thus, in this embodiment, a configuration for specifying a section in which an error occurs in the target trajectory on the basis of a simulation or a behavior that is actually measured (hereinafter, also referred to as "trace data") and adding a special command for suppressing the error is provided. In description presented below, a configuration for providing such a function using the support apparatus 200 will be described.

### (i1: Hardware configuration of support apparatus)

Next, one example of the hardware configuration of the support apparatus 200 will be described. FIG. 10 is a schematic diagram illustrating one example of the hardware configuration of the support apparatus 200 according to this embodiment.

Referring to FIG. 10, the support apparatus 200, typically, is realized by executing a support program 218 on a personal computer having a general architecture. More specifically, as illustrated in FIG. 10, the support apparatus 200 includes: a processor 202; a display 204; a main memory 206; a storage 208; a USB controller 212; and an input device 214. Such components are interconnected through an internal bus 210.

The processor 202 is configured by a CPU (Central Processing Unit), an MPU (Microprocessing Unit), a GPU (Graphics Processing Unit), or the like and realizes various functions as will be described later by reading various programs including the OS (Operation System) 216 and the support program 218 stored in the storage 208, expanding the programs in the main memory 206, and executing the programs. The main memory 206 is configured by a volatile memory device such as a DRAM or an SRAM. The storage 208, for example, is configured by a nonvolatile memory device such as an HDD or an SSD.

The display 204 is a device that displays results of arithmetic operations executed by the processor 202 and the like and, for example, is configured by a liquid crystal display (LCD) or the like.

The USB controller 212 exchanges data with the control apparatus 100 through a USB connection.

The input device 214 is a device that receives a user's operation and, for example, is configured by a keyboard, a memory, and the like.

As will be described later, the support apparatus 200 according to this embodiment processes the application program 32 including one or a plurality of commands defining a target trajectory.

### (i2: functional configuration of support apparatus)

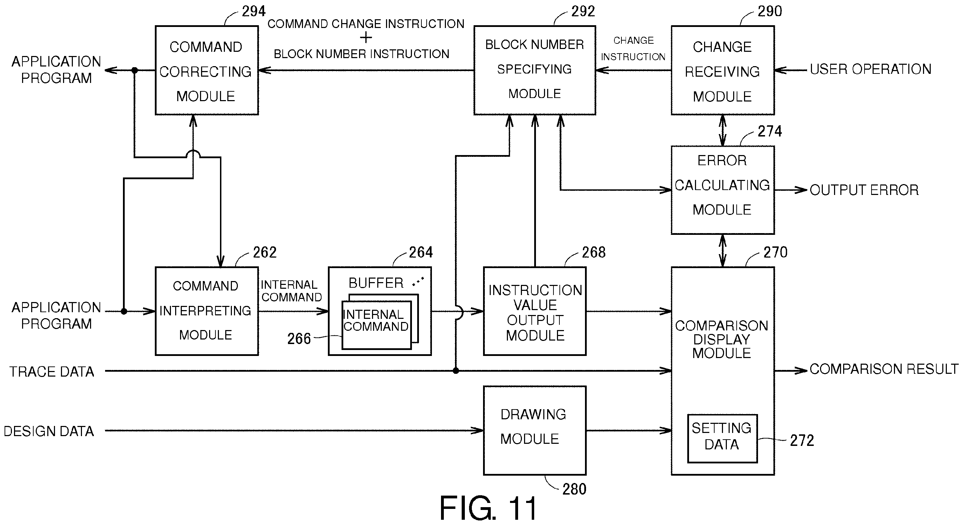

Next, one example of the functional configuration of the support apparatus 200 will be described. FIG. 11 is a schematic diagram illustrating one example of the functional configuration of the support apparatus 200 according to this embodiment. Each function illustrated in FIG. 11, typically, is realized when the processor 202 of the support apparatus 200 executes the support program 218.

As illustrated in FIG. 11, the support apparatus 200 includes: a command interpreting module 262; a buffer 264; an instruction value output module 268; a comparison display module 270; an error calculating module 274; a drawing module 280; a change receiving module 290; a block number specifying module 292; and a command correcting module 294.

The support apparatus 200 acquires a trajectory of a control target configured from one or a plurality of motors following an instruction value output for each control period on the basis of the application program 32 by the control apparatus 100. In order words, the support apparatus 200 acquires a trajectory (hereinafter, also referred to as an "actual behavior") of a control target according to an instruction value for each control period. The trajectory is calculated on the basis of the internal command generated by sequentially interpreting the application program 32.

In this embodiment, as a method of acquiring such an actual behavior, a method based on a simulation and a method based on a behavior (trace data) that is actually measured can be used. In a practical product, only one thereof may be implemented.

The command interpreting module 262, the buffer 264, and the instruction value output module 268 function as a simulator calculating a trajectory (actual behavior) in which a control target moves on the basis of the application program 32.

More specifically, the command interpreting module 262 executes a process that is similar to that of the command interpreting unit 162 of the control apparatus 100. In other words, the command interpreting module 262 sequentially interprets an input application program 32 and generates internal commands 266. The internal commands 266 generated by the command interpreting module 262 are sequentially stored in the buffer 264. The instruction value output module 268 executes a process similar to that of the instruction value output unit 168 of the control apparatus 100. In other words, the instruction value output module 268 outputs an instruction value for a motor that is a control target in accordance with the generated internal command 166 for each control period.

The actual behavior of the control target is acquired on the basis of an instruction value for each control period that is output by such a simulator.

Alternatively, the trace data measured from the control target that is actually controlled by the control apparatus 100 may be used as it is.

The support apparatus 200 acquires the original trajectory (hereinafter, also referred to as an "ideal behavior") of the control target according to the target trajectory. In this embodiment, as a method of acquiring such an ideal behavior, a method based on the design data of a finished product and a method based on the application program 32 can be used. In a practical product, only one thereof may be implemented.

The drawing module 280 calculates an ideal behavior on the basis of the design data of a finished product. A trajectory in which the control target moves (ideal behavior) is generated. As the design data, typically, CAD/CAM data and the like are used.

In addition, in a case in which the method on the basis of the application program 32 is used, a target trajectory may be directly drawn by interpreting one or a plurality of commands included in the application program 32.

The comparison display module 270 compares the actual behavior with the ideal behavior and outputs a result of the comparison to the display 204 or the like. In addition, the comparison display module 270 may refer to setting data 272 for associating the instruction value supplied from the instruction value output module 268 or the trace data with actual coordinates.

The comparison display module 270 also has a function of generating and providing a verification screen 600 to be described later.

The error calculating module 274 calculates an error between the actual behavior and the ideal behavior and outputs the position (coordinates) thereof and the magnitude of the error.

The change receiving module 290 receives a change direction for the application program 32 in accordance with a user operation. The block number specifying module 292 specifies a block that is a target inside the application program 32 in accordance with a change direction from the change receiving module 290.

The block number specifying module 292 specifies a target block number on the basis of information of the internal command 266 that is processed by the instruction value output module 268, information of the position (coordinates) that is a target from the error calculating module 274, and the like. In other words, the error calculating module 274 extracts a portion in which an error between the actual behavior and the ideal behavior exceeds an allowed error range set in advance, and the block number specifying module 292 specifies a command corresponding to the extracted portion included in the application program 32.

The command correcting module 294 corrects the command included in the application program 32 in accordance with a direction to change the command from the block number specifying module 292 and a direction of a block number that is a target and outputs the application program after the correction.

### (i3: Example of screen user interface of support apparatus)

Next, one example of the screen user interface provided by the functional configuration as illustrated in FIG. 11 will be described.

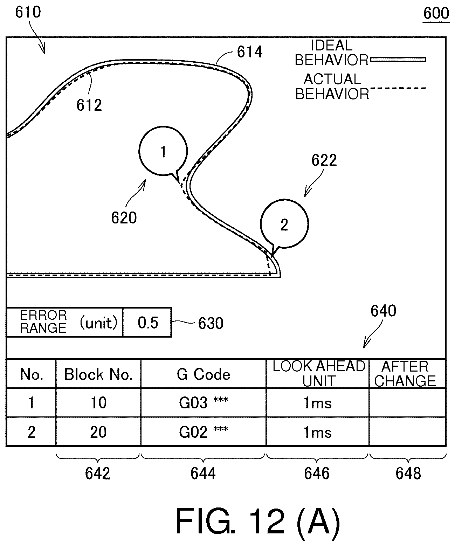

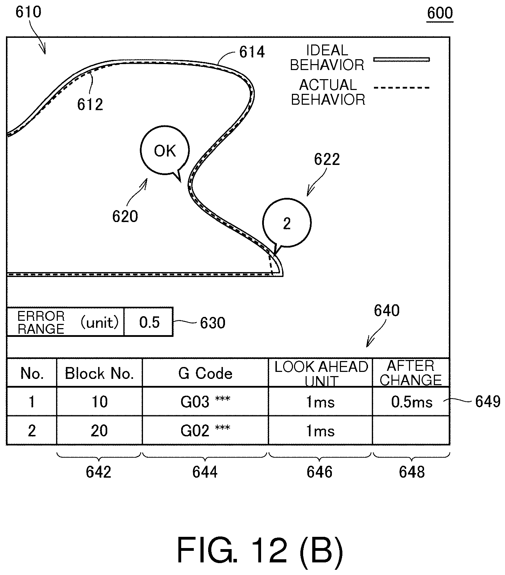

FIG. 12(A) and 12(B) are schematic diagrams respectively illustrating one example of a user interface on a screen provided by the support apparatus 200 according to this embodiment. As illustrated in FIG. 12(A), the verification screen 600 includes a trajectory display area 610 including a trace 612 corresponding to the actual behavior and a trace 614 corresponding to the ideal behavior. In portions in which the magnitude of an error between the trace 612 and the trace 614 exceeds a condition (allowed error range) set in advance, attention indication objects 620 and 622 are displayed. In this way, the support apparatus 200 displays the actual behavior and the ideal behavior in an overlapping manner and displays the attention indication objects 620 and 622 in association with the portions in which errors exceeding the allowed error range occur.

In the example illustrated in FIG. 12(A), there are two portions in which errors exceed the allowed error range, and the portions are respectively represented using the attention indication objects 620 and 622. The conditions set in advance (allowed error range) can be arbitrarily adjusted in accordance with a value set to an allowed error range input area 630.

In a detail display area 640, information of each portion exceeding the allowed error range is displayed. More specifically, the detail display area 640 includes: a block number display area 642 representing a block number of the application program 32 corresponding to a portion exceeding an allowed error range; a code display area 644 representing the details of a code described in the block number; a looking ahead unit display area 646 representing the magnitude of the looking ahead unit set for the code described in the block number; and a looking ahead unit receiving display area 648 that receives the size of the look head unit after change.

A case will be assumed in which a user changes the looking ahead unit of a first error occurrence portion in the verification screen 600 as illustrated in FIG. 12(A). In FIG. 12(B), an example is illustrated in which a user inputs "0.5 ms" instead of the current looking ahead unit "1 ms" to an input area 649. As described above, the internal command is generated on the basis of the information of a plurality of passage points 42 set on the target trajectory 40 calculated by sequentially interpreting the application program 32. At this time, the added special command changes the set interval between passage points 42 set on the target trajectory 40.

In accordance with the user's changing the looking ahead unit, the simulator (the command interpreting module 262, the buffer 264, and the instruction value output module 268) processes another application program 32, whereby the trace 612 corresponding to the actual behavior is updated. In other words, the support apparatus 200 updates the actual behavior on the basis of the application program 32 after the addition of the special command.

The actual behavior after the update is compared with the ideal behavior, and, in a case in which the error in the first error occurrence portion is within the allowed error range or less, the attention indication object 620 is changed to a normal display object 621. In this way, in the actual behavior calculated on the basis of the application program 32 after the addition of the special command, in a case in which the portion in which the error that has exceeded the allowed error range is within the allowed error range, the support apparatus 200 updates the attention indication object 620 with the normal display object 621.

In addition, for the convenience of description, although an example in which only the looking ahead unit is changed has been illustrated in FIG. 12, the change is not limited thereto, and the looking ahead number and/or the internal command buffer number may be configured to be arbitrarily changed by the user. For example, for the looking ahead number, a command designating the number of passage points 42 required for the generation of an internal command is added.

In this way, in accordance with a user operation, the command correcting module 294 of the support apparatus 200 adds a special command used for changing the processing accuracy at the time of generating an internal command from the command included in the application program 32 before the specified command.

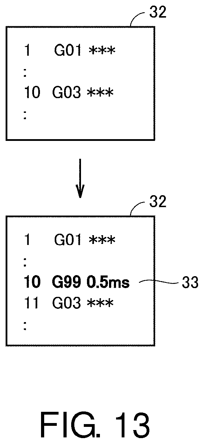

FIG. 13 is a schematic diagram for describing a process of changing the application program 32 in accordance with a user operation for the screen user interface illustrated in FIG. 12. Referring to FIG. 13, among a plurality of commands included in the application program 32, the special command 33 is added immediately before a target command. In the example illustrated in FIGS. 12 and 13, the special command 33 is added before the command of the 10th block that is the target.

By presenting such an interactive-type verification screen 600 to the user, the user can appropriately adjust the set conditions (the looking ahead unit, the looking ahead number, and the number of internal command buffers) at the time of sequentially executing the application program 32.

### (i4: Processing Sequence)

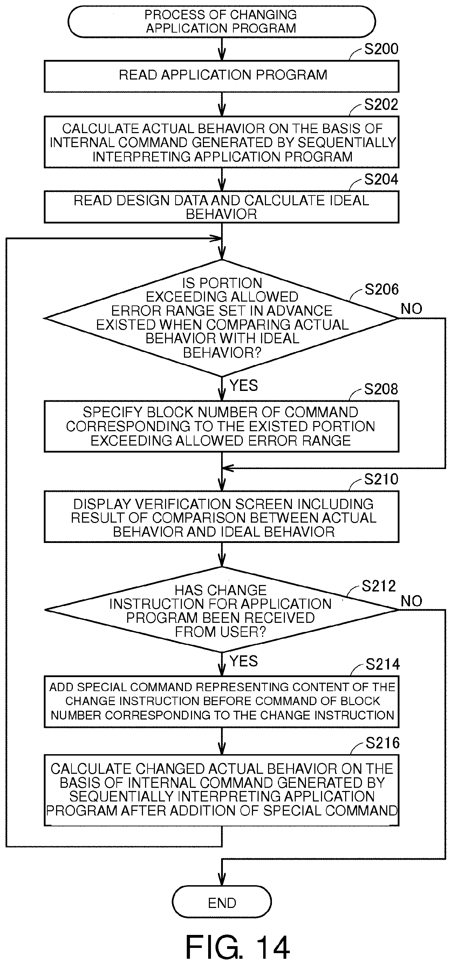

Next, the sequence of the process of adding a special command to the application program 32 in the support apparatus 200 will be described. FIG. 14 is a flowchart illustrating the sequence of the process of changing the application program 32 using the support apparatus 200 according to this embodiment. Each step illustrated in FIG. 14, typically, is realized when the processor 202 of the support apparatus 200 executes the support program 218 stored in the storage 208.

Referring to FIG. 14, the support apparatus 200 reads the application program 32 (Step S200) and calculates an actual behavior on the basis of the internal command 266 generated by sequentially interpreting the application program 32 (Step S202).

In addition, in a case in which trace data is input instead of the application program 32, instead of the process of Step S202, an actual behavior based on the trace data is calculated.

In addition, the support apparatus 200 reads design data and calculates an ideal behavior (Step S204). Then, the support apparatus 200 compares the actual behavior calculated in Step S202 with the ideal behavior calculated in Step S204 and determines whether or not a portion exceeding an allowed error range set in advance is present (Step S206).

In a case in which a portion having an error exceeding the allowed error range set in advance is present between the actual behavior and the ideal behavior (in the case of "Yes" in Step S206), the support apparatus 200 specifies a block number in which a command corresponding to the portion having an error exceeding the allowed error range is present among commands included in the application program 32 (Step S208). On the other hand, in a case in which a portion having an error exceeding the allowed error range set in advance is not present between the actual behavior and the ideal behavior (in the case of "No" in Step S206), the process of Step S208 is skipped.

The support apparatus 200 displays the verification screen 600 including a result of the comparison between the actual behavior and the ideal behavior (Step S210).

When the support apparatus 200 receives a change direction for changing the application program 32 from the user on the verification screen 600 (in the case of "Yes" in Step S212), the support apparatus 200 adds a special command representing details of the change direction before a command of a block number corresponding to the change direction (Step S214). Then, the actual behavior after the addition of the special command is simulated. In other words, the support apparatus 200 calculates an actual behavior after the change on the basis of the internal commands 266 generated by sequentially interpreting the application program 32 after the addition of the special command (Step S216). Then, the processes of Step S206 and subsequent steps are repeated.

In a case in which there is no change direction for the application program 32 from the user (in the case of "No" in Step S212), the support apparatus 200 outputs the application program 32 after the change as necessary and ends the process.

### <J. Modified example>

In the description presented above, while the control apparatus 100 executing the sequence program 30 and the application program 32 has been described, any other program may be similarly applied as long as the program is described in the interpreter mode.

In addition, the configuration is not limited to a configuration in which the sequence program 30 and the application program 32 are executed in parallel like the control apparatus 100 according to this embodiment, and the disclosure can also be applied to an execution environment in which only the application program 32 is sequentially executed.

### <L. Summary>

In this embodiment, the control apparatus can interpret a special command used for changing the processing accuracy at the time of generating an internal command from a command included in the application program. By using such a special command, the control accuracy can be locally improved in accordance with the complexity of a target trajectory or the like.

By using the special command used for changing the processing accuracy, the particle size (looking ahead unit) of passage points calculated by the syntax analysis of the application program, the buffer size of the looking ahead, and the like can be dynamically changed.

In this embodiment, on the support apparatus or the like, the actual behavior is compared with the ideal behavior, and in a case in which the amount of deviation thereof exceeds a criterion set in advance, a corresponding portion is notified to the user. The user can add a special command used for adjusting the control accuracy to the application in accordance with the portion in which an error exceeding the criterion occurs. Accordingly, the control accuracy for a portion not satisfying the requested control accuracy can be realized. In addition, since an actual trajectory according to the application program after the addition of the special command can be checked, the user can check the validity of the setting using the special command and the like at a glance.

In addition, in this embodiment, a plurality of internal commands generated from the application program can be given to the instruction value output unit that calculates an instruction value for each control period. Accordingly, a situation can be avoided in which an internal command is not generated in time, and the operation is stopped. In other words, an interval between operations is eliminated, and a continuous trajectory can be realized.

By employing the configuration described above, compared to a conventional technology, smoother curve processing and shape processing can be realized. In addition, the accuracy of the processing can be easily adjusted in response to a request.

### [Reference Signs List]

1 Control system
2 Field network
6 Higher-order network
30 Sequence program
32 and 32A Application program
33, 33A, and 33B Special command
34 System program
40 Target trajectory
42, 42A Passage point
44 Movement path
100 Control apparatus
102 and 202 Processor
104 Chip set
106 and 206 Main memory
108 and 208 Storage
110 Higher-order network controller
112 and 212 USB controller
114 Memory card interface
116 Memory card
120 Internal bus controller
122 I/O unit
130 Field network controller
150 Sequence program executing unit
152 Sequence command interpreting unit
154 Library
156 Motion instruction value output unit
160 Application program executing unit
162 Command interpreting unit
164 and 264 Buffer
166 and 266 Internal command
168 Instruction value output unit
170 Shared memory
172 and 174 Instruction value
180 Input/output refresh processing unit
200 Support apparatus
204 Display
210 Internal bus
214 Input device
216 OS
218 Support program
262 Command interpreting module
268 Instruction value output module
270 Comparison display module
272 Set data
274 Error calculating module
280 Drawing module
290 Change receiving module
292 Block number specifying module
294 Command correcting module
300 Server apparatus
400 Display device
500 Field device
510 Remote I/O device
520 and 530 Servo driver
522 and 532 Servo motor
540 Machine tool
550 Conveyance apparatus
554 Workbench
600 Verification screen
T1 Control period
T2 Application execution period
W Work

## Claims

1. A control apparatus (100) for controlling one or a plurality of motors (522_1, 522_2, 522_3, 532), the control apparatus comprising:
an instruction value output unit (168) configured to output an instruction value (172, 174) for the one or plurality of motors for each control period (T1); and
a command interpreting unit (162) configured to sequentially interpret an application program (32, 32A) including one or a plurality of commands defining a target trajectory and to generate an internal command (166, 266) that is necessary for outputting the instruction value for each control period that is executed by the instruction value output unit,
wherein the command interpreting unit (162) is configured to calculate a passage point on the target trajectory for each period set in advance in accordance with a command included in the application program and to generate the internal command in accordance with calculated passage points (42) **characterized in that** the command interpreting unit is further configured to change the period with which the passage points are calculated to a length designated by a specific command (33, 33A, 33B) in a case in which the specific command defined in advance is executed in the sequential interpretation of the application program.

2. The control apparatus according to claim 1, wherein the command interpreting unit is configured to interpret one or a plurality of commands used after the specific command in the application program in accordance with designation in the specific command when the specific command is executed.

3. The control apparatus according to claim 1 or 2, wherein the specific command includes a command used for returning a period with which the passage points are calculated which has been changed to its original value.

4. The control apparatus according to any one of claims 1 to 3, wherein the command interpreting unit is configured to generate the internal command corresponding to an interval between the passage points adjacent to each other on the target trajectory on the basis of information of the plurality of passage points subsequent to the passage points adjacent to each other on the target trajectory.

5. The control apparatus according to claim 4, wherein the specific command includes a command designating the number of the plurality of passage points required for generation of the internal command.

6. The control apparatus according to any one of claims 1 to 5, further comprising a buffer (164) that is configured to sequentially store the internal commands generated by the command interpreting unit,
wherein the specific command includes a command designating the number of internal commands stored in the buffer.

7. The control apparatus according to any one of claims 1 to 6, wherein the specific command is defined in accordance with a language format used for writing the application program.

8. The control apparatus according to any one of claims 1 to 7, wherein the internal command is defined as a function representing a behavior of each motor between the passage points adjacent to each other set on the target trajectory.

9. A control method for controlling one or a plurality of motors (522_1, 522 2, 522_3, 532), the control method comprising:
outputting an instruction value (172, 174) for the one or plurality of motors for each control period (T1); and
sequentially interpreting an application program (32, 32A) including one or a plurality of commands defining a target trajectory (40) and generating an internal command (166, 266) that is necessary for outputting the instruction value for each control period, and
wherein sequentially interpreting an application program and generating of an internal command includes:
calculating a passage point (42) on the target trajectory for each period set in advance in accordance with a command included in the application program and generating the internal command in accordance with calculated passage points; and **characterized in**
changing the period at which the passage points are calculated to a length designated by a specific command (33, 33A, 33B) in a case in which a specific command defined in advance is executed in the sequential interpretation of the application program.

## Patentansprüche

1. Steuervorrichtung (100) zum Steuern eines oder eine Vielzahl von Motoren (522_1, 522 2, 522 3, 532), wobei die Steuervorrichtung umfasst:
eine Befehlswert-Ausgabeeinheit (168), die konfiguriert ist, einen Befehlswert (172, 174) für den einen oder die Vielzahl von Motoren für jede Steuerperiode (T1) auszugeben; und
eine Befehlsinterpretationseinheit (162), die konfiguriert ist, sequentiell ein Anwendungsprogramm (32, 32A) zu interpretieren, das einen oder eine Vielzahl von Befehlen enthält, definierend eine Zieltrajektorie, und um einen internen Befehl (166, 266) zu erzeugen, der zum Ausgeben des Befehlswertes für jede Steuerperiode erforderlich ist, die von der Befehlswertausgabeeinheit ausgeführt wird,
wobei die Befehlsinterpretationseinheit (162) konfiguriert ist, einen Durchgangspunkt auf der Zieltrajektorie für jede im Voraus festgelegte Periode in Übereinstimmung mit einem in dem Anwendungsprogramm enthaltenen Befehl zu berechnen und den internen Befehl in Übereinstimmung mit berechneten Durchgangspunkten (42) zu erzeugen, **dadurch gekennzeichnet, dass** die Befehlsinterpretationseinheit ferner konfiguriert ist, um die Periode, mit der die Durchgangspunkte berechnet werden, auf eine Länge zu ändern, die durch einen spezifischen Befehl (33, 33A, 33B) in einem Fall bestimmt ist, in dem der im Voraus definierte spezifische Befehl in der sequentiellen Interpretation des Anwendungsprogramms ausgeführt wird.

2. Steuervorrichtung gemäß Anspruch 1, wobei die Befehlsinterpretationseinheit konfiguriert ist, einen oder eine Vielzahl von Befehlen, die nach dem spezifischen Befehl in dem Anwendungsprogramm verwendet werden, in Übereinstimmung mit der Bezeichnung in dem spezifischen Befehl zu interpretieren, wenn der spezifische Befehl ausgeführt wird.

3. Steuervorrichtung gemäß Anspruch 1 oder 2, wobei der spezifische Befehl einen Befehl enthält, der zum Rückgeben einer Periode verwendet wird, mit der die Durchgangspunkte berechnet werden, die auf ihren ursprünglichen Wert geändert wurde.

4. Steuervorrichtung gemäß einem der Ansprüche 1 bis 3, wobei die Befehlsinterpretationseinheit konfiguriert ist, den internen Befehl, der einem Intervall zwischen den auf der Zieltrajektorie zueinander benachbarten Durchgangspunkten entspricht, basierend auf Informationen der Vielzahl von Durchgangspunkten zu erzeugen, die auf die zueinander benachbarten Durchgangspunkte auf der Zieltrajektorie folgen.

5. Steuervorrichtung gemäß Anspruch 4, wobei der spezifische Befehl einen Befehl enthält, der die Anzahl der Vielzahl von Durchgangspunkten bezeichnet, die zum Erzeugen des internen Befehls erforderlich sind.

6. Steuervorrichtung gemäß einem der Ansprüche 1 bis 5, ferner umfassend einen Puffer (164), der konfiguriert ist, die von der Befehlsinterpretationseinheit erzeugten internen Befehle sequentiell zu speichern,
wobei der spezifische Befehl einen Befehl enthält, der die Anzahl der in dem Puffer gespeicherten internen Befehle bezeichnet.

7. Steuervorrichtung gemäß einem der Ansprüche 1 bis 6, wobei der spezifische Befehl in Übereinstimmung mit einem zum Schreiben des Anwendungsprogramms verwendeten Sprachformat definiert ist.

8. Steuervorrichtung gemäß einem der Ansprüche 1 bis 7, wobei der interne Befehl als eine Funktion definiert ist, die ein Verhalten jedes Motors zwischen den auf der Zieltrajektorie festgelegten, zueinander benachbarten Durchgangspunkten darstellt.

9. Steuerungsverfahren zur Steuerung eines oder einer Vielzahl von Motoren (522_1, 522 2, 522 3, 532), wobei das Steuerungsverfahren umfasst:
Ausgeben eines Befehlswertes (172, 174) für den einen oder die Vielzahl von Motoren für jede Steuerperiode (T1); und
sequentielles Interpretieren eines Anwendungsprogramms (32, 32A), das einen oder eine Vielzahl von Befehlen enthält, die eine Zieltrajektorie (40) definieren, und Erzeugen eines internen Befehls (166, 266), der zum Ausgeben des Befehlswerts für jede Steuerperiode erforderlich ist, und
wobei das sequentielle Interpretieren eines Anwendungsprogramms und das Erzeugen eines internen Befehls enthält:
Berechnen eines Durchgangspunktes (42) auf der Zieltrajektorie für jede im Voraus festgelegte Periode gemäß einem im Anwendungsprogramm enthaltenen Befehl und Erzeugen des internen Befehls gemäß den berechneten Durchgangspunkten; und
**gekennzeichnet durch**, ändern der Periode, bei der die Durchgangspunkte berechnet werden, auf eine Länge, die durch einen spezifischen Befehl (33, 33A, 33B) bestimmt wird, in einem Fall, in dem ein spezifischer, im Voraus definierter Befehl in der sequentiellen Interpretation des Anwendungsprogramms ausgeführt wird.

## Revendications

1. Appareil de commande (100) pour commander un ou plusieurs moteurs (522_1, 522_2, 522_3, 532), l'appareil de commande comprenant :
une unité de sortie de valeur d'instruction (168) configurée pour délivrer une valeur d'instruction (172, 174) pour les un ou plusieurs moteurs pour chaque période de commande (T1) ; et
une unité d'interprétation de commande (162) configurée pour interpréter séquentiellement un programme d'application (32, 32A) incluant une ou plusieurs commandes définissant une trajectoire cible et pour générer une commande interne (166, 266) qui est nécessaire pour délivrer la valeur d'instruction pour chaque période de commande qui est exécutée par l'unité de sortie de valeur d'instruction,
dans lequel l'unité d'interprétation de commande (162) est configurée pour calculer un point de passage sur la trajectoire cible pour chaque période réglée à l'avance en fonction d'une commande incluse dans le programme d'application et pour générer la commande interne en fonction de points de passage (42) calculés,
**caractérisé en ce que** l'unité d'interprétation de commande est en outre configurée pour changer la période à laquelle les points de passage sont calculés à une longueur désignée par une commande spécifique (33, 33A, 33B) dans un cas dans lequel la commande spécifique définie à l'avance est exécutée dans l'interprétation séquentielle du programme d'application.

2. Appareil de commande selon la revendication 1, dans lequel l'unité d'interprétation de commande est configurée pour interpréter une ou plusieurs commandes utilisées après la commande spécifique dans le programme d'application en fonction d'une désignation dans la commande spécifique lorsque la commande spécifique est exécutée.

3. Appareil de commande selon la revendication 1 ou 2, dans lequel la commande spécifique inclut une commande utilisée pour retourner une période à laquelle les points de passage sont calculés qui a été changée à sa valeur initiale.

4. Appareil de commande selon l'une quelconque des revendications 1 à 3, dans lequel l'unité d'interprétation de commande est configurée pour générer la commande interne correspondant à un intervalle entre les points de passage adjacents l'un à l'autre sur la trajectoire cible sur la base d'informations de la pluralité de points de passage à la suite des points de passage adjacents l'un à l'autre sur la trajectoire cible.

5. Appareil de commande selon la revendication 4, dans lequel la commande spécifique inclut une commande désignant le nombre de la pluralité de points de passage nécessaires pour la génération de la commande interne.

6. Appareil de commande selon l'une quelconque des revendications 1 à 5, comprenant en outre une mémoire tampon (164) qui est configurée pour stocker séquentiellement les commandes internes générées par l'unité d'interprétation de commande,
dans lequel la commande spécifique inclut une commande désignant le nombre de commandes internes stockées dans la mémoire tampon.

7. Appareil de commande selon l'une quelconque des revendications 1 à 6, dans lequel la commande spécifique est définie en fonction d'un format de langage utilisé pour écrire le programme d'application.

8. Appareil de commande selon l'une quelconque des revendications 1 à 7, dans lequel la commande interne est définie en tant qu'une fonction représentant un comportement de chaque moteur entre les points de passage adjacents l'un à l'autre sur la trajectoire cible.

9. Procédé de commande pour commander un ou plusieurs moteurs (522_1, 522_2, 522_3, 532), le procédé de commande comprenant :
la délivrance d'une valeur d'instruction (172, 174) pour les un ou plusieurs moteurs pour chaque période de commande (T1) ; et
l'interprétation séquentielle d'un programme d'application (32, 32A) incluant une ou plusieurs commandes définissant une trajectoire cible (40) et la génération d'une commande interne (166, 266) qui est nécessaire pour délivrer la valeur d'instruction pour chaque période de commande, et
dans lequel l'interprétation séquentielle d'un programme d'application et la génération d'une commande interne incluent :
le calcul d'un point de passage (42) sur la trajectoire cible pour chaque période réglée à l'avance en fonction d'une commande incluse dans le programme d'application et la génération de la commande interne en fonction de points de passage calculés ; et
**caractérisé par**
le changement de la période à laquelle les points de passage sont calculés à une longueur désignée par une commande spécifique (33, 33A, 33B) dans un cas dans lequel une commande spécifique définie à l'avance est exécutée dans l'interprétation séquentielle du programme d'application.
